# EUROPEAN PATENT APPLICATION

(11) **EP 4 697 671 A1**
(43) Date of publication of application: **18.02.2026**
(21) Application number: 24759045.8
(22) Date of filing: 28.06.2024
(51) Int. Cl.: H04L 45/745

(54) **PACKET PROCESSING METHOD AND APPARATUS, AND DEVICE**

(71) Applicant: New H3C Technologies Co., Ltd., Hangzhou, Zhejiang 310052 (CN)
(72) Inventor: WANG, Jian, Beijing 100102 (CN); WANG, Qiyong, Beijing 100102 (CN); FU, Zhiqiang, Beijing 100102 (CN); SUN, Songer, Beijing 100102 (CN); QI, Jiehui, Beijing 100102 (CN)
(74) Representative: Grünecker Patent- und Rechtsanwälte PartG mbB
(86) International application number: PCT/CN2024/102265
(87) International publication number: WO 2026/000328

(57) **Abstract**

The present disclosure provides a packet processing method, apparatus, and device. The method includes: obtaining a data packet, wherein the data packet comprises a segment routing header; obtaining a path segment identifier from the segment routing header; if there is an access control policy corresponding to the path segment identifier, and the access control policy comprises path information which is configured to send the data packet to a service node, sending the data packet to the service node based on the access control policy, so that the service node performs secure processing on the data packet; if the data packet returned by the service node is received, sending the data packet based on the segment routing header of the data packet. Through the application solution, access control of the data packet can be realized based on the path segment identifier.

## Description

### TECHNICAL FIELD

The present disclosure relates to the field of communication technologies, and in particular to a packet processing method, apparatus, and device.

### BACKGROUND

Segment routing is an extended source routing technology. A head-end node adds a segment list to a data packet to guide the data packet to be forwarded according to a specific path through the segment list, thus realizing traffic engineering. For example, in an Internet protocol version 6 (IPv6) network, the segment list can include IPv6 addresses of respective nodes on a specific path, and the data packet is guided to be forwarded according to the specific path based on the IPv6 addresses.

A segment routing policy is a tunnel drainage technology based on the segment routing technology. After receiving a data packet, the head-end node encapsulates a segment routing header for the data packet. The segment routing header includes a segment list. The segment list can include IPv6 addresses of respective nodes on a specific path. The respective nodes on the specific path can forward the data packet based on the segment routing header.

However, in segment routing, a destination address in an IPv6 protocol is dynamically changed based on the segment list. If an inner-layer payload packet or a segment routing header is not decapsulated, a final destination of the data packet is unknown, and the returned data packet may pass through different path segments, which leads to a risk of failure in establishing a session flow according to parameters such as quintuples for access control.

### SUMMARY

The present disclosure provides a packet processing method, which is applied to network devices, the method including:
obtaining a data packet, where the data packet includes a segment routing header;
obtaining a path segment identifier from the segment routing header;
if there is an access control policy corresponding to the path segment identifier, and the access control policy includes path information which is configured to send the data packet to a service node, sending the data packet to the service node based on the access control policy, so that the service node performs secure processing on the data packet;
if the data packet returned by the service node is received, sending the data packet based on the segment routing header of the data packet.

The present disclosure provides a packet processing apparatus, which is applied to a network device, the apparatus including:
an obtaining module, configured to obtain a data packet, where the data packet includes a segment routing header; and
obtain a path segment identifier from the segment routing header; and
a sending module, configured to, if there is an access control policy corresponding to the path segment identifier, and the access control policy includes path information which is configured to send the data packet to a service node, send the data packet to the service node based on the access control policy, so that the service node performs secure processing on the data packet; if the data packet returned by the service node is received, send the data packet based on the segment routing header of the data packet.

The present disclosure provides a network device including a processor and a machine-readable storage medium, where the machine-readable storage medium stores machine executable instructions that can be executed by the processor, and the processor is configured to execute the machine executable instructions to implement the packet processing method of the above example.

From the above technical solution, it can be seen that in the embodiments of the present disclosure, the path segment identifier is obtained from the segment routing header of the data packet, and the data packet is sent to the service node based on the access control policy corresponding to the path segment identifier, so that the service node can perform secure processing on the data packet, thereby providing secure services for the data packet, and transmitting the data packet after secure processing in the network to avoid secure risks to the network. Access control of the data packet can be realized based on the path segment identifier.

### BRIEF DESCRIPTION OF THE DRAWINGS

FIG. 1 is a flowchart of a packet processing method in an embodiment of the present disclosure.
FIG. 2 is a schematic diagram of an application scenario of a segment routing policy in an embodiment of the present disclosure.
FIGs. 3A to 3C are schematic diagrams of segment routing headers in an embodiment of the present disclosure.
FIG. 4 is a schematic diagram of a SR policy in an embodiment of the present disclosure.
FIG. 5 is a schematic diagram of an application scenario for providing a plurality of service nodes in an embodiment of the present disclosure.
FIG. 6A is a schematic diagram of a controller configuring an access control policy in an embodiment of the present disclosure.
FIG. 6B is a schematic diagram of a third-party device configuring an access control policy in an embodiment of the present disclosure.
FIG. 7 is a schematic structural diagram of a packet processing apparatus in an embodiment of the present disclosure.
FIG. 8 is a hardware structure diagram of a network device in an embodiment of the present disclosure.

### DETAILED DESCRIPTION OF THE EMBODIMENTS

An embodiment of the present disclosure proposes a packet processing method that can be applied to a network device. The network device can serve as a head-end node, an intermediate node or a tail-end node. The intermediate node can be a router or a switch between the head-end node and the tail-end node, or a service node through which a data packet passes, which is not limited.

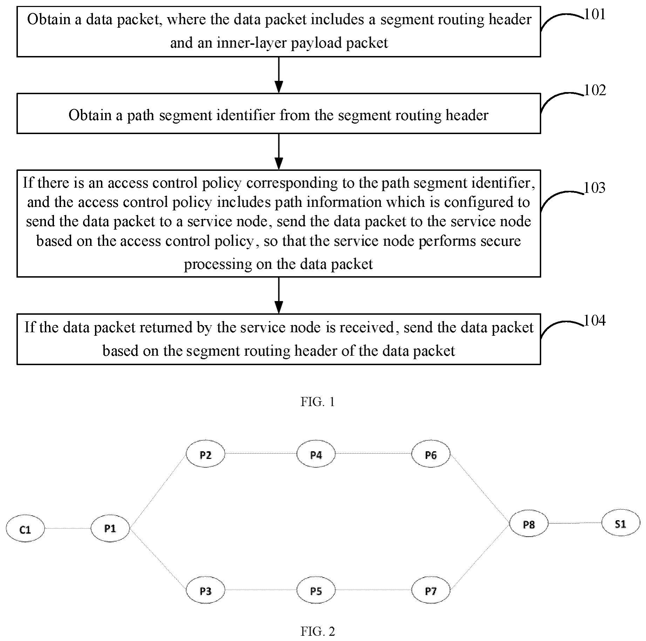

As shown in FIG. 1, which is a flowchart of the method, the method may include steps 101 to 104.

In step 101, a data packet is obtained, where the data packet includes a segment routing header and an inner-layer payload packet.

In step 102, a path segment identifier is obtained from the segment routing header. The path segment identifier is configured to describe attribute features of a path segment of segment routing, and the attribute features are configured for access control on the data packet. The path segment represents a path segment among a head-end node, one or more intermediate nodes, and a tail-end node.

In step 103, if there is an access control policy corresponding to the path segment identifier, and the access control policy includes path information which is configured to send the data packet to a service node, the data packet is sent to the service node based on the access control policy, so that the service node performs secure processing on the data packet.

In an example, if there is the access control policy corresponding to the path segment identifier and the access control policy is a release policy, the data packet can be sent based on the segment routing header of the data packet.

Or, if there is the access control policy corresponding to the path segment identifier and the access control policy is a discard policy, the data packet will be discarded and no longer sent based on the segment routing header of the data packet.

In step 104, if the data packet returned by the service node is received, the data packet is sent based on the segment routing header of the data packet.

In an example, there being the access control policy corresponding to the path segment identifier can include: querying for whether there is the access control policy corresponding to the path segment identifier in a session entry; if yes, obtaining the access control policy corresponding to the path segment identifier from the session entry; if not, and there is the access control policy corresponding to the path segment identifier in a policy library of the network device, obtaining the access control policy corresponding to the path segment identifier from the policy library, and recording the access control policy corresponding to the path segment identifier into the session entry.

The access control policy in the policy library can be configured by a user on the network device, For example, the configured access control policy corresponding to the path segment identifier of the network device can be obtained and recorded in the policy library. Or, the access control policy in the policy library is the access control policy corresponding to the path segment identifier of the network device sent by a controller. For example, the access control policy corresponding to the path segment identifier of the network device sent by the controller can be received and recorded in the policy library.

In an example, there being the access control policy corresponding to the path segment identifier can include: querying for if there is the access control policy corresponding to the path segment identifier in a session entry; if yes, obtaining the access control policy corresponding to the path segment identifier from the session entry; if not, sending the path segment identifier to a third-party device, so that the third-party device queries for the access control policy corresponding to the path segment identifier. If the access control policy corresponding to the path segment identifier sent by the third-party device is received, the access control policy corresponding to the path segment identifier is recorded into the session entry.

In an example, there being the access control policy corresponding to the path segment identifier can include: obtaining a first target attribute feature from all attribute features of the path segment identifier; determining whether there is an access control policy corresponding to the first target attribute feature; if yes, determining the access control policy corresponding to the first target attribute feature as the access control policy corresponding to the path segment identifier.

The access control policy includes a matching condition and a matching action; if the matching condition includes an attribute feature value and the first target attribute feature matches the attribute feature value, the access control policy corresponds to the first target attribute feature; or if the matching condition includes an attribute feature value interval and the first target attribute feature is within the attribute feature value interval, the access control policy corresponds to the first target attribute feature.

The first target attribute feature includes a candidate path identifier which is configured to indicate a candidate path to which the path segment belongs; the attribute feature value of the matching condition includes one or more designated network nodes. If the candidate path indicated by the candidate path identifier includes the one or more designated network nodes, the first target attribute feature matches the attribute feature value.

In an example, a process of determining whether there is the access control policy corresponding to the path segment identifier can include: obtaining a second target attribute feature from all attribute features of the path segment identifier, where the second target attribute feature is configured to indicate an application scenario corresponding to the path segment identifier. If the application scenario corresponding to the path segment identifier is a secure access control scenario, it is determined whether there is the access control policy corresponding to the path segment identifier.

In an example, obtaining the path segment identifier from the segment routing header can include: obtaining a designated flag from the segment routing header, where the designated flag can be a first value or a second value; where the first value can indicate that the path segment identifier is included in the segment routing header, and the second value can indicate that the path segment identifier is not included in the segment routing header. On this basis, if the designated flag is the first value, the path segment identifier can be obtained from the segment routing header.

In an example, if the network device serves as a head-end node, obtaining the data packet can include: after receiving an inner-layer payload packet, encapsulating the segment routing header for the inner-layer payload packet to obtain the data packet; where when encapsulating the segment routing header, the segment routing header includes the path segment identifier and a segment list, and the segment list includes identification information of a tail-end node, identification information of one or more intermediate nodes, and identification information of the head-end node.

In an example, if the network device serves as a head-end node, the method can further include: if a path segment among the head-end node, one or more intermediate nodes, and a tail-end node is generated by the network device, allocating the path segment identifier to the path segment when generating the path segment; publishing the path segment identifier to the one or more intermediate nodes and the tail-end node, or publishing the path segment identifier to a controller, so that the controller publishes the path segment identifier to the one or more intermediate node and the tail-end node.

Or, if the path segment among the head-end node, the one or more intermediate nodes, and the tail-end node is generated by a controller, the head-end node can receive a publishing message sent by the controller, where the publishing message can include the path segment identifier, and the path segment identifier is allocated to the path segment by the controller when generating the path segment. The intermediate nodes and the tail-end node can also receive a publishing message sent by the controller, where the publishing message can include the path segment identifier.

In an example, if the network device serves as a tail-end node, the method can further include: if the path segment identifier of a path segment among a head-end node, one or more intermediate nodes, and the tail-end node is allocated by the network device (the tail-end node), the tail-end node sends a path calculation request to the head-end node so that the head-end node generates the path segment; the tail-end node receives the path segment sent by the head-end node and allocates the path segment identifier to the path segment; the tail-end node publishes the path segment identifier and the path segment to the one or more intermediate nodes and the head-end node, or the tail-end node publishes the path segment identifier and the path segment to a controller, so that the controller publishes the path segment identifier and the path segment to the one or more intermediate node and the head-end node.

Or, if the path segment identifier of the path segment among the head-end node, the one or more intermediate nodes, and the tail-end node is allocated by the network device (the tail-end node), the tail-end node sends a path calculation request to a controller so that the controller generates the path segment; receives the path segment sent by the controller and allocates the path segment identifier to the path segment; the tail-end node publishes the path segment identifier and the path segment to the one or more intermediate nodes and the head-end node, or publishes the path segment identifier and the path segment to the controller, so that the controller publishes the path segment identifier and the path segment to the one or more intermediate node and the head-end node.

In an example, if the network device serves as a tail-end node, the method can further include: determining whether a forwarding path of the data packet passes through one or more designated type nodes, where the one or more designated type nodes are nodes that need to send the data packet to the service node based on an access control policy; if yes, sending the data packet based on the segment routing head; if not, discarding the data packet, and sending a path update request to a head-end node, so that the head-end node re-designates a forwarding path which passes through the one or more designated type nodes.

In an example, the path segment identifier can include, but is not limited to, at least one of the following attribute features.

A path segment type identifier, where the path segment type identifier can include, but is not limited to, at least one of the following: a first identifier, which can be configured to indicate whether the path segment identifier is a global identifier or a local identifier; a second identifier, which can be configured to indicate whether the path segment identifier is a static path identifier or a dynamic path identifier; a third identifier, which can be configured to indicate whether the segment routing header includes identification information of a head-end node or does not includes the identification information of the head-end node; a fourth identifier, which can be configured to indicate contents that needs to be checked; a fifth identifier, which can be configured to indicate a check algorithm; or a sixth identifier, which can be configured to indicate an application scenario corresponding to the path segment identifier. For example, the sixth identifier is configured to indicate that the application scenario corresponding to the path segment identifier is secure access control, or that the application scenario is path performance measurement, or that the application scenario is bidirectional path binding, or that the application scenario is end-to-end path protection.

A segment routing policy identifier, which can be configured to indicate a segment routing policy to which a path segment belongs.

A candidate path identifier, which can be configured to indicate a candidate path to which the path segment belongs.

A segment routing path identifier, which can be configured to indicate a segment list to which the path segment belongs.

A check value, which can be obtained by checking the contents that needs to be checked indicated by the fourth identifier by using the check algorithm indicated by the fifth identifier.

From the above technical solution, it can be seen that in the embodiments of the present disclosure, the path segment identifier is obtained from the segment routing header of the data packet, and the data packet is sent to the service node based on the access control policy corresponding to the path segment identifier, so that the service node can perform secure processing on the data packet, thereby providing secure services for the data packet, and transmitting the data packet after secure processing in the network to avoid secure risks to the network. Access control of the data packet can be realized based on the path segment identifier.

The above technical solution of the embodiments of the present disclosure will be described below in combination with specific application scenarios.

The segment routing policy is a tunnel drainage technology based on the segment routing technology. Based on the segment routing policy, a head-end node encapsulates a segment routing header for a data packet after receiving the data packet. The segment routing header can include a segment list. For example, in an IPv6 network, the segment list can include segment routing addresses of respective nodes on a specific path, thereby guiding the data packet to be forwarded according to the specific path based on the segment routing addresses. In application scenarios such as a secure access service edge (SASE) and a computing power network, it is necessary to provide secure services based on information of the data packet, and these secure services are provided by one or more service nodes. For example, a service function chain (SFC) technology can provide a plurality of service nodes.

An embodiment of the present disclosure proposes a packet processing method that can realize access control for a data packet.

As shown in FIG. 2, which is a schematic diagram of an application scenario of a segment routing policy, a source node C1 (for example, a terminal device, etc.) can send a data packet to a destination node S1 (for example, a server, etc.), with P1 as a head-end node (for example, a network device such as a router or a switch) and P8 as a tail-end node (for example, a network device such as a router or a switch). On a forwarding path, P2, P4, and P6 serve as intermediate nodes (for example, network devices such as a router or a switch), and on another forwarding path, P3, P5, and P7 serve as intermediate nodes. In the above application scenario, the embodiment of the present disclosure proposes a packet processing method, which may involve the following process.

Firstly, a path segment identifier is defined, which can represent a segment identifier of a path segment among a head-end node, one or more intermediate nodes, and a tail-end node. For example, the path segment identifier can represent a segment identifier of a path segment among the head-end node P1, the intermediate node P2, the intermediate node P4, the intermediate node P6, and the tail-end node P8. Or, the path segment identifier can represent a segment identifier of a path segment among the head-end node P1, the intermediate node P3, the intermediate node P5, the intermediate node P7, and the tail-end node P8.

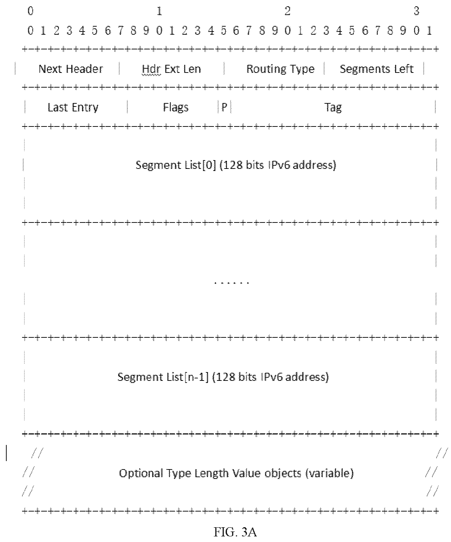

In an example, after receiving a data packet, the head-end node can encapsulate a segment routing head (SRH) for the data packet. As shown in FIG. 3A, which is a schematic diagram of the segment routing head. The segment routing head can sequentially include the following contents.

Next Header: used to indicate a type of a packet header immediately following the segment routing header, such as IPv4 encapsulation, IPv6 encapsulation, IPv6-Route, ICMPv6.

Hdr Ext Len (header extension length): used to indicate a length of the segment routing header, Hdr Ext Len can refer to a length of the segment routing header excluding the first 8 bytes (the first 8 bytes are a fixed length).

Routing Type: used to indicate a type of a routing header.

Segments Left: used to indicate a number of intermediate nodes that should still be accessed before reaching the destination node, that is, a number of intermediate nodes between a current node and the tail-end node.

Last Entry: used to indicate an index of the last element in the segment list.

Flags: used to represent some identifiers of the data packet. Flags can include 8 bits. A flag is applied from 8 bits of the Flags field, and the flag is denoted as P-flag. The P-flag can be referred to as a designated flag, and the P-flag can be a first value (such as 1) or a second value (such as 0). When the P-flag is the first value, it indicates that the path segment identifier is included in the segment routing header. When the P-flag is the second value, it indicates that the path segment identifier is not included in the segment routing header.

For a node that does not support a path segment identifier processing, the P-flag can be ignored. For a node that supports the path segment identifier processing, if the path segment identifier processing is not enabled, the P-flag can also be ignored. For a node that supports the path segment identifier processing, if the path segment identifier processing is enabled, the P-flag needs to be obtained.

Tag: used to identify packets in the same group.

Segment List[0]~Segment List[n-1]: a segment list can include Segment List[0]~Segment List[n-1], and the segment list is encoded from the last segment of the path. Segment List[0] is the last segment of the path (used to represent identification information of the last node, which can be an IPv6 address), Segment List[1] is the second-to-last segment of the path (used to represent identification information of the second-to-last node), Segment List[n-2] is the second segment of the path (used to represent identification information of the second node), and Segment List[n-1] is the first segment of the path (used to represent identification information of the first node).

Optional Type Length Value objects, which is optional.

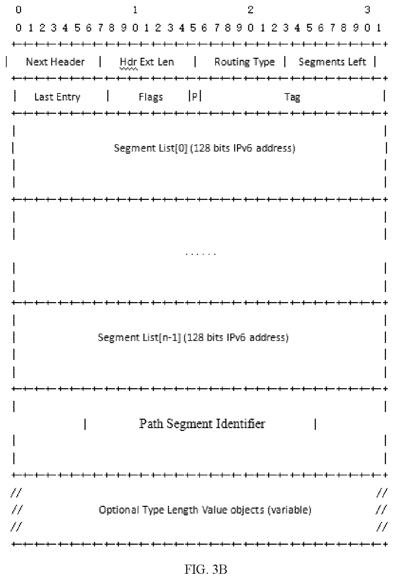

On the basis of the segment routing header shown in FIG. 3A, if the P-flag is the first value, that is, the path segment identifier is included in the segment routing header, then the segment routing header can refer to FIG. 3B, that is, the segment routing header can include a Path Segment Identifier. In an IPv6 network, the Path Segment Identifier can also be referred to as an SRv6 Path Segment.

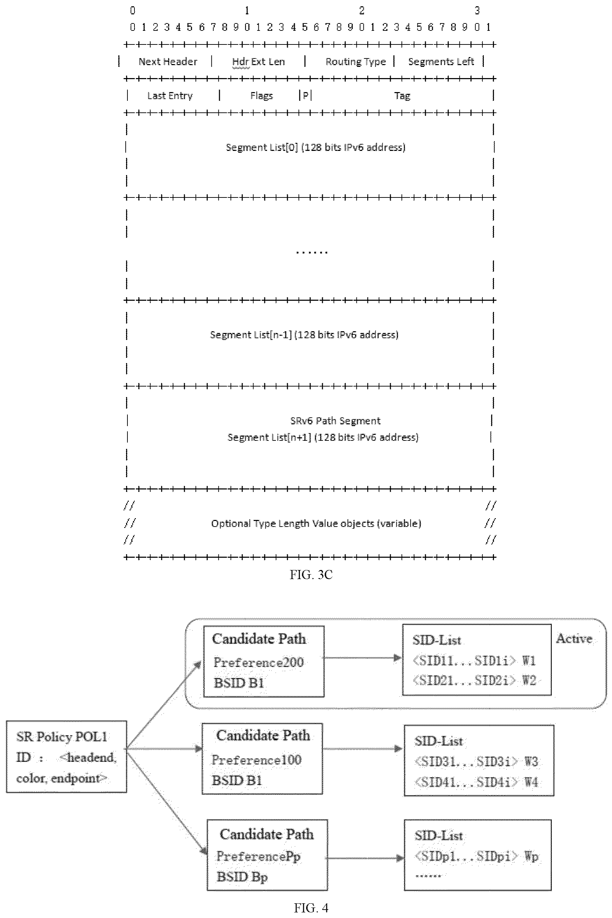

On the basis of the segment routing header shown in FIG. 3B, the segment list of the segment routing header can include identification information of the head-end node. As shown in FIG. 3C, which is a schematic diagram of a segment routing header, the segment routing header includes a segment list, which sequentially includes Segment List[0]~Segment List[n], where Segment List[n] is the identification information of the head-end node (such as an IPv6 address).

The segment list of the segment routing header is not encapsulated from the first node after the head-end node (ingress node), but the identification information of the head-end node is encapsulated into the segment list. That is, the segment list is encapsulated from the head-end node, so as to realize the access control policy for the data packet at the head-end node.

The identification information of the head-end node can be located after the Segment List[n-1] and before the Path Segment Identifier. In this case, the identification information of the head-end node can be denoted as Segment List[n]. The identification information of the head-end node can also be located after the Path Segment Identifier. In this case, the identification information of the head-end node can be denoted as Segment List[n+1].

The above are only examples and there is no limitation on the location of the identification information of the head-end node.

In an example, the path segment identifier can include but is not limited to at least one of the following fields: a path segment type identifier field (a path segment type field), a segment routing policy identifier field (a segment routing (SR) type identifier field), a candidate path identifier field, a segment routing path identifier field (a SID identifier field), and a check field. For example, as shown in Table 1, the path segment identifier can include a 16- bit fixed-length path segment type identifier field, a 32-bit fixed-length segment routing policy identifier field, a 32-bit fixed-length candidate path identifier field, a 32-bit (or 24-bit) fixed-length segment routing path identifier field, and a 16-bit fixed-length check field. Table 1 is just an example of the path segment identifier.

**Table 1**

| | | | | |
|---|---|---|---|---|
| path segment type field (16 bits) | SR type identifier field (32 bits) | candidate path identifier field (32 bits) | SID identifier field (32 bits) | check field (16 bits) |

For the path segment type identifier field, the path segment type identifier field is used to identify a type of a path segment, and distinguish and identify path segments of different application scenarios and types. The path segment type identifier field can be a fixed length of 16 bits. The path type identifier field can include but is not limited to at least one of the following: a first identifier, a second identifier, a third identifier, a fourth identifier, a fifth identifier, or a sixth identifier.

The first identifier is used to indicate whether the path segment identifier is a global identifier or a local identifier. For example, the first identifier can be 1 bit. If the first identifier is a first value (such as 1), it indicates that the path segment identifier is a global identifier. If the first identifier is a second value (such as 0), it indicates that the path segment identifier is a local identifier. For example, if the path segment identifier is limited in an SR domain, the first identifier is used to indicate that the path segment identifier is a local identifier, that is, the path segment identifier has uniqueness within one SR domain. If the path segment identifier can span one or more SR domains, the first identifier is used to indicate that the path segment identifier is a global identifier.

The second identifier is used to indicate whether the path segment identifier is a static path identifier or a dynamic path identifier. For example, the second identifier can be 1 bit. If the second identifier is a first value (such as 1), it indicates that the path segment identifier is a static path identifier. If the second identifier is a second value (such as 0), it indicates that the path segment identifier is a dynamic path identifier. For example, when a path segment is statically configured, a path segment identifier can also be statically configured for this path segment. In this way, the second identifier can be used to indicate that the path segment identifier is a static path identifier. When a path segment is dynamically generated by using an algorithm, a path segment identifier can also be dynamically generated for this path segment. In this way, the second identifier can be used to indicate that the path segment identifier is a dynamic path identifier.

The third identifier can be used to indicate whether the segment routing header includes identification information of the head-end node or does not include the identification information of the head-end node. For example, the third identifier can be 1 bit. If the third identifier is a first value (such as 1), the third identifier is used to indicate that the segment routing header includes the identification information of the head-end node. If the third identifier is a second value (such as 0), the third identifier is used to indicate that the segment routing header does not include the identification information of the head-end node. For example, if the identification information of the head-end node (i.e., the ingress node of SR) is encapsulated in the segment routing header, the third identifier is used to indicate that the segment routing header includes the identification information of the head-end node. If the identification information of the head-end node is not encapsulated in the segment routing header, the third identifier is used to indicate that the segment routing header does not include the identification information of the head-end node.

The fourth identifier can be used to indicate contents that need to be checked, that is, to indicate a check range of the check field. For example, the fourth identifier can be 1 bit. If the fourth identifier is a first value (such as 1), it is used to indicate that the path segment and the path segment identifier are checked. If the fourth identifier is a second value (such as 0), it is used to indicate that only the path segment is checked. For example, if the path segment and the path segment identifier are checked, the fourth identifier is used to indicate that the path segment and the path segment identifier are checked. If only the path segment is checked, the fourth identifier is used to indicate that only the path segment is checked.

The fifth identifier can be used to indicate a check algorithm. For example, the fifth identifier can be 3 bits, and the check algorithm is indicated by the fifth identifier, such as a 16-bit cyclic redundancy check and a 16-bit hash function. For example, if the 16-bit cyclic redundancy check is used for checking, the fifth identifier is used to indicate that the 16-bit cyclic redundancy check is used as the check algorithm. If the 16-bit hash function is used for checking, the fifth identifier is used to indicate that the 16-bit hash function is used as the check algorithm.

The sixth identifier is used to indicate an application scenario corresponding to the path segment identifier. For example, the sixth identifier can be 3 bits, which is used to indicate that the application scenario corresponding to the path segment identifier is secure access control, or that the application scenario corresponding to the path segment identifier is path performance measurement, or that the application scenario corresponding to the path segment identifier is bidirectional path binding, or that the application scenario corresponding to the path segment identifier is end-to-end path protection. The above are just a few examples of application scenarios, and the application scenario applicable to this embodiment is secure access control.

In addition to the first identifier, the second identifier, the third identifier, the fourth identifier, the fifth identifier, and the sixth identifier, the path segment type identifier field can also include reserved bits, which can be defined and allocated according to the scenario.

For the segment routing policy identifier field, the segment routing policy identifier field can include a segment routing policy identifier. The segment routing policy identifier can be used to indicate a segment routing policy (SR policy) to which a path segment belongs, that is, to indicate which segment routing policy a path segment of a path segment identifier belongs to.

For example, the color in a triplet <head-end node, color, tail-end node>of a segment routing policy can be used as the segment routing policy identifier, which has a fixed length of 32 bits. Color is used to distinguish a plurality of segment routing policies between the same head-end node and the same tail-end node. Color is an important attribute of segment routing policies, usually representing intention and indicating a specific way of reaching the tail-end node (such as low latency, low cost, security). Therefore, the color in the triplet can be used as the segment routing policy identifier.

For the candidate path identifier field, the candidate path identifier field can include a candidate path identifier, and the candidate path identifier can be used to indicate a candidate path to which a path segment belongs, that is, to indicate which candidate path in the SR domain a path segment of a path segment identifier belongs to.

For example, in a candidate path triplet <Protocol-Origin, Originator, Discriminator>, the Discriminator attribute is used to distinguish different candidate paths in the SR policy. Therefore, the Discriminator attribute can be used as a candidate path identifier, and a length of the candidate path identifier is the same as that of the Discriminator attribute, both of which are 32 bits. <Protocol-Origin, Originator, Discriminator> is an identifier that uniquely identifies a candidate path in the SR policy. Protocol-Origin is used to describe a protocol/pathway through which the candidate path is generated, Originator describes a node that generates the candidate path, and Discriminator is an identifier used to distinguish candidate paths in a <Protocol-Origin, Originator> space.

For the segment routing path identifier field, the segment routing path identifier field can include the segment routing path identifier, and the segment routing path identifier can be used to indicate a segment list to which a path segment belongs, that is, to identify which segment list the path segment belongs to, which can be composed of a fixed-length field.

From the above, it can be seen that the path segment identifier can include the segment routing policy identifier, the candidate path identifier, and the segment routing path identifier. These identifiers are beneficial for respective nodes on the path to quickly identify the segment routing policy, the candidate path, and the segment list for different levels of access control, as well as for aggregating and analyzing of path segments. For example, all segment lists under a candidate path identifier can be controlled based on the candidate path identifier in the path segment identifier.

The SR policy uses a triplet <head-end node, color, tail-end node> as key values, and each SR policy can include a plurality of candidate paths, which can also be paths based segment routing IPv6 (SRv6). That is, a plurality of segment lists in a candidate path are IPv6 addresses. For example, each candidate path has a preference value, and the higher the preference value of the path, the more preferred the path is. A candidate path can include a plurality of segment lists, each of which has a weight. In the SR policy, a valid candidate path with the highest priority will be selected as an active candidate path. The plurality of segment lists in the active candidate path will share carrying services by weight. Refer to FIG. 4, which is a schematic diagram of a SR policy. In the SR policy, the segment routing policy identifier, the candidate path identifier, and the segment routing path identifier are involved. Therefore, the segment routing policy identifier, the candidate path identifier, and the segment routing path identifier can be used as the path segment identifier.

For the check field, the check field can include a check value, and the check value is obtained by checking the contents that needs to be checked indicated by the fourth identifier by using the check algorithm indicated by the fifth identifier.

For example, if the fifth identifier is used to indicate that the 16-bit cyclic redundancy check is used as the check algorithm, and the fourth identifier is used to indicate that the path segment and the path segment identifier are checked, then the 16-bit cyclic redundancy check is used as the check algorithm to check the path segment and the path segment identifier to obtain a check value, and the check field includes the check value. Or, if the fifth identifier is used to indicate that the 16-bit hash function is used as the check algorithm, and the fourth identifier is used to indicate that only the path segment is checked, then the 16-bit hash function is used as the check algorithm to check the path segment to obtain a check value, and the check field includes the check value.

For example, the check field is used to check one or more specific fields in the segment routing header, such as the path segment and the path segment identifier. The check field is mainly used to check errors, damages, and modification behaviors during data transmission. The damages, tampering, and modification behaviors of the segment routing header during forwarding can be checked to prevent secure control failures due to the above reasons. Binding between the path segment and the path segment identifier can be implemented.

The above process provides an implementation scheme of the path segment identifier. In addition to the path segment type identifier field, the segment routing policy identifier field, the candidate path identifier field, the segment routing path identifier field, and the check field, the path segment identifier can also include the Protocol-Origin field in the candidate path triplet to distinguish different path generation manners, such as configuration, path computation element communication protocol (PCEP), border gateway protocol (BGP). The Protocol-Origin field can be placed in the path segment type identifier field. There is no limitation on the path segment identifier.

Secondly, a method for allocating a path segment identifier and a method for publishing the path segment identifier are proposed.

In an example, based on the path segment identifier mentioned above, it is necessary to allocate the path segment identifier to the path segment, and the head-end node, the one or more intermediate nodes, and the tail-end node all need to obtain the path segment identifier. In order to enable the head-end node, the intermediate nodes, and the tail-end node to obtain the path segment identifier, the following manners can be adopted.

Manner 1: the path segment among the head-end node, the intermediate nodes, and the tail-end node is generated by the head-end node. When generating the path segment, the head-end node allocates a path segment identifier to the path segment. After obtaining the path segment identifier, the head-end node can publish the path segment identifier to the intermediate nodes and the tail-end node. For example, the head-end node publishes the path segment identifier to the intermediate nodes (intermediate nodes capable of processing path segment identifiers) and the tail-end node through a routing protocol (such as a BGP protocol or other type of routing protocol).

Manner 2: the path segment among the head-end node, the intermediate nodes, and the tail-end node is generated by the head-end node. When generating the path segment, the head-end node allocates a path segment identifier to the path segment. After obtaining the path segment identifier, the head-end node can publish the path segment identifier to a controller, so that the controller can publish the path segment identifier to the intermediate nodes (intermediate nodes capable of processing path segment identifiers) and the tail-end node.

Manner 3: the path segment among the head-end node, the intermediate nodes, and the tail-end node is generated by a controller. When generating the path segment, the controller allocates a path segment identifier to the path segment. After obtaining the path segment identifier, the controller publishes the path segment identifier to the head-end node, the intermediate nodes (intermediate nodes capable of processing path segment identifiers), and the tail-end node. The head-end node receives the publishing message sent by the controller and obtains the path segment identifier from the publishing message. The intermediate nodes receive the publishing message sent by the controller and obtain the path segment identifier from the publishing message. The tail-end node receives the publishing message sent by the controller and obtains the path segment identifier from the publishing message.

Manner 4: a path segment identifier of the path segment among the head-end node, the intermediate nodes, and the tail-end node is allocated by the tail-end node. The tail-end node can send a path calculation request to the head-end node. After receiving the path calculation request, the head-end node can generate the path segment among the head-end node, the intermediate nodes, and the tail-end node. When sending the path calculation request to the head-end node, the tail-end node can also send a path constraint policy (for example, designating one or more specific node addresses in the path). The path constraint policy indicates constraint conditions of the path segment, so that the head-end node generates a path segment that satisfies the path constraint policy. After generating the path segment, the head-end node publishes the path segment to the tail-end node.

The tail-end node receives the path segment sent by the head-end node and allocates a path segment identifier to the path segment. After generating the path segment identifier, the tail-end node can publish the path segment identifier to the intermediate nodes and the head-end node. For example, the tail-end node can publish the path segment identifier to the intermediate nodes (intermediate nodes capable of processing path segment identifiers) and the head-end node through a routing protocol. When publishing the path segment identifier to the intermediate nodes and the head-end node, the tail-end node can also publish the path segment to the intermediate nodes and the head-end node.

Manner 5: a path segment identifier of the path segment among the head-end node, the intermediate nodes, and the tail-end node is allocated by the tail-end node. The tail-end node can send a path calculation request to the head-end node, and can also send a path constraint policy (for example, designating one or more specific node addresses in the path). The path constraint policy indicates constraint conditions of the path segment, so that the head-end node generates a path segment that satisfies the path constraint policy. After receiving the path calculation request, the head-end node generates the path segment among the head-end node, the intermediate nodes, and the tail-end node, and publishes the path segment to the tail-end node. The tail-end node receives the path segment sent by the head-end node and allocates a path segment identifier to the path segment. The tail-end node can publish the path segment and the path segment identifier to the head-end node, and the head-end node can publish the path segment and the path segment identifier to the intermediate nodes (intermediate nodes capable of processing path segment identifiers).

Manner 6: a path segment identifier of the path segment among the head-end node, the intermediate nodes, and the tail-end node is allocated by the tail-end node. The tail-end node can send a path calculation request to the head-end node, and can also send a path constraint policy (for example, designating one or more specific node addresses in the path). The path constraint policy indicates constraint conditions of the path segment, so that the head-end node generates a path segment that satisfies the path constraint policy. After receiving the path calculation request, the head-end node generates the path segment among the head-end node, the intermediate nodes, and the tail-end node, and publishes the path segment to the tail-end node. The tail-end node receives the path segment sent by the head-end node and allocates a path segment identifier to the path segment. The tail-end node can publish the path segment and the path segment identifier to a controller, and the controller can publish the path segment and the path segment identifier to the head-end node and the intermediate nodes (intermediate nodes capable of processing path segment identifiers).

Manner 7: a path segment identifier of the path segment among the head-end node, the intermediate nodes, and the tail-end node is allocated by the tail-end node. The tail-end node can send a path calculation request to a controller, and can also send a path constraint policy (for example, designating one or more specific node addresses in the path). The path constraint policy indicates constraint conditions of the path segment, so that the controller generates a path segment that satisfies the path constraint policy. After receiving the path calculation request, the controller generates the path segment among the head-end node, the intermediate nodes, and the tail-end node, and publishes the path segment to the tail-end node. The tail-end node receives the path segment sent by the controller, allocates a path segment identifier to the path segment, and publishes the path segment and the path segment identifier to the intermediate nodes (intermediate nodes capable of processing path segment identifiers) and the head-end node.

Manner 8: a path segment identifier of the path segment among the head-end node, the intermediate nodes, and the tail-end node is allocated by the tail-end node. The tail-end node can send a path calculation request to a controller, and can also send a path constraint policy (for example, designating one or more specific node addresses in the path). The path constraint policy indicates constraint conditions of the path segment, so that the controller generates a path segment that satisfies the path constraint policy. After receiving the path calculation request, the controller generates the path segment among the head-end node, the intermediate nodes, and the tail-end node, and publishes the path segment to the tail-end node. The tail-end node receives the path segment sent by the controller, and allocates a path segment identifier to the path segment. The tail-end node can publish the path segment and the path segment identifier to the head-end node, and the head-end node can publish the path segment and the path segment identifier to the intermediate nodes (intermediate nodes capable of processing path segment identifiers).

Manner 9: a path segment identifier of the path segment among the head-end node, the intermediate nodes, and the tail-end node is allocated by the tail-end node. The tail-end node can send a path calculation request to a controller, and can also send a path constraint policy (for example, designating one or more specific node addresses in the path). The path constraint policy indicates constraint conditions of the path segment, so that the controller generates a path segment that satisfies the path constraint policy. After receiving the path calculation request, the controller generates the path segment among the head-end node, the intermediate nodes, and the tail-end node, and publishes the path segment to the tail-end node. The tail-end node receives the path segment sent by the controller, and allocates a path segment identifier to the path segment. The tail-end node can publish the path segment identifier and the path segment to the controller, so that the controller can publish the path segment identifier and the path segment to the intermediate nodes (intermediate nodes capable of processing path segment identifiers) and the head-end node.

Manner 10: a path segment identifier of the path segment among the head-end node, the intermediate nodes, and the tail-end node is allocated by the tail-end node. A controller can generate the path segment among the head-end node, the intermediate nodes, and the tail-end node, and publish the path segment to the tail-end node. Compared with manners 7, 8, and 9, in manner 10, the controller actively generates the path segment and publishes the path segment to the tail-end node, rather than generating the path segment among the head-end node, the intermediate nodes, and the tail-end node after receiving a path calculation request sent by the tail-end node.

The tail-end node receives the path segment sent by the controller and allocates a path segment identifier to the path segment. The tail-end node publishes the path segment and the path segment identifier to the intermediate nodes (intermediate nodes capable of processing path segment identifiers) and the head-end node. Or, the tail-end node publishes the path segment and the path segment identifier to the head-end node, and the head-end node publishes the path segment and the path segment identifier to the intermediate node s (intermediate nodes capable of processing path segment identifiers). Or, the tail-end node publishes the path segment identifier and the path segment to the controller, and the controller publishes the path segment identifier and the path segment to the intermediate nodes (intermediate nodes capable of processing path segment identifiers) and the head-end node.

In manners 1 to 10, the path segment is generated dynamic calculation. After obtaining the path segment, a path segment identifier is dynamically allocated to the path segment, that is, the path segment identifier is a dynamic path identifier.

Manner 11: a path segment identifier is statically configured at the head-end node, the tail-end node, or a controller. In Method 11, a path segment identifier is statically allocated to the path segment, that is, the path segment identifier is a static path identifier.

For example, the path segment identifier can be statically configured at the head-end node, and the head-end node can publish the path segment identifier to the intermediate nodes and the tail-end node through a routing protocol or a control interface protocol.

For example, the path segment identifier can be statically configured at the head-end node, and the head-end node can publish the path segment identifier to a controller through a routing protocol or a control interface protocol. The controller can publish the path segment identifier to the intermediate nodes and the tail-end node through a routing protocol or a control interface protocol.

For example, the path segment identifier can be statically configured at a controller. The controller can publish the path segment identifier to the head-end node, the intermediate nodes, and the tail-end node through a routing protocol or a control interface protocol.

For example, the path segment identifier can be statically configured at the tail-end node. The tail-end node can publish the path segment identifier to the head-end node and the intermediate nodes through a routing protocol or a control interface protocol.

For example, the path segment identifier can be statically configured at the tail-end node. The tail-end node can publish the path segment identifier to a controller through a routing protocol or a control interface protocol, and the controller can publish the path segment identifier to the head-end node and the intermediate nodes through a routing protocol or a control interface protocol.

In manners 1-11, path segment identifiers can be published through an extension field of the BGP protocol, or through an extension field of a BGP-Link State (BGP-LS) protocol, or through an extension field of a PCEP protocol, or through an extension field of an intermediate system to intermediate system (IS-IS) protocol. There is no limitation on the publishing message of the path segment identifier.

Thirdly, a method for configuring an access control policy is proposed.

In an application scenario such as a SASE and a computing power network, secure services can be provided to a user through one or more service nodes. For example, a service function chain (SFC) technology can provide a plurality of service nodes, such as one or more service nodes for implementing traffic cleaning services (the service nodes filter insecure data packets through the traffic cleaning services), one or more service nodes for implementing intrusion prevention services (the service nodes filter insecure data packets through the intrusion prevention services), or one or more service nodes for implementing other services. There is no limitation on functions of the service nodes.

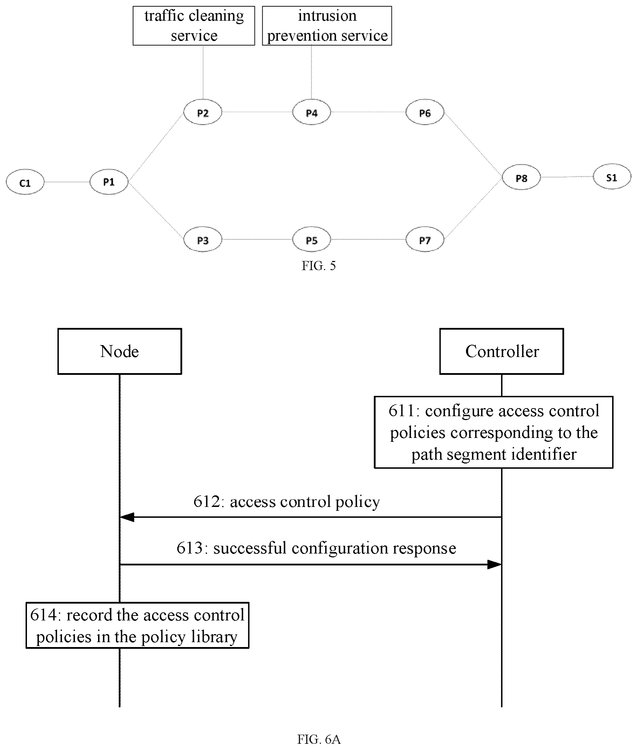

In an example, nodes connected to the service nodes can be determined from the one or more intermediate nodes and the tail-end nodes. FIG. 5 is a schematic diagram of an application scenario of providing a plurality of service nodes. It is assumed that the intermediate node P2 is connected to a service node 1 for implementing traffic cleaning services, and the intermediate node P4 is connected to a service node 2 for implementing intrusion prevention services, which will be described later with reference to FIG. 5 as an example.

Since the intermediate node P2 is connected to the service node 1, it is necessary to configure an access control policy at the intermediate node P2. The access control policy is used to make the intermediate node P2 send the data packet to the service node 1. There is no limitation on contents of the access control policy, as long as the access control policy is used to make the intermediate node P2 send the data packet to the service node 1. For example, the access control policy may include path information (for example, an IP address of the service node 1), and the path information is used to make the intermediate node P2 send the data packet to the service node 1. For example, based on the IP address of the service node 1, the intermediate node P2 sends the data packet to the service node 1, and the service node 1 can perform the traffic cleaning services on the data packet. Since the intermediate node P4 is connected to the service node 2, it is necessary to configure an access control policy at the intermediate node P4. The access control policy is used to make the intermediate node P4 send the data packet to the service node 2. For example, the access control policy may include path information (for example, an IP address of the service node 2), and the path information is used to make the intermediate node P4 send the data packet to the service node 2, and the service node 2 performs the intrusion prevention services on the data packet.

When configuring the access control policy, the access control policy can include a matching condition and a matching action.

For the matching action of the access control policy, the matching action is used to send the data packet to a service node. For example, the matching action includes path information, which is used to send the data packet to the service node. Or, the matching action can be a release policy, that is, the data packet is directly forwarded without the above service node. Or, the matching action may be a discard policy, that is, the data packet is directly discarded.

For the matching condition of the access control policy, the matching condition may include a path segment identifier. It is assumed that the path segment identifier includes three attribute features A, B, and C, the matching condition includes the three attribute features A, B, and C of the path segment identifier. On this basis, if the path segment identifier in the data packet matches the path segment identifier in the matching condition, it indicates that the access control policy corresponds to the path segment identifier.

For the matching condition of the access control policy, the matching condition may include an attribute feature value (that is, partial attribute feature values among all attribute features of the path segment identifier). It is assumed that the path segment identifier includes three attribute features A, B, and C, the matching condition includes the A attribute feature value of the path segment identifier. On this basis, the A attribute feature value can be obtained from the path segment identifier in the data packet. If the A attribute feature value matches the A attribute feature value in the matching condition, it indicates that the access control policy corresponds to the path segment identifier.

For the matching condition of the access control policy, the matching condition may include an attribute feature value interval (that is, an interval of partial attribute feature values among all attribute features of the path segment identifier). It is assumed that the path segment identifier includes three attribute features, A, B, and C, the matching condition includes an interval (i.e., a value range) of the A attribute feature value of the path segment identifier. On this basis, the A attribute feature value can be obtained from the path segment identifier in the data packet. If the A attribute feature value is within the interval of the A attribute feature value in the matching condition, it indicates that the access control policy corresponds to the path segment identifier.

In summary, the matching condition of the access control policy can correspond to the value or the value range of a specific field attribute of the path segment identifier, or the value or the value range of a combination of several specific field attributes. For example, access control can be performed for a specific segment routing type, as long as the access control can match a specific segment routing policy type field, that is, <Path Segment Type Identifier field (Path Segment Type field), Segment Routing Policy Identifier field>.

In addition, access control can also be performed for a specific candidate path, as long as the access control can match a candidate path type field, that is, <Path Segment Type Identifier field (Path Segment Type field), Segment Routing Policy Identifier field, Candidate Path Identifier field>.

The above is just examples, and there is no limitation on the matching condition of the access control policy.

In an example, when configuring the access control policy, the following manners can be adopted.

Manner 1: a node obtains a configured access control policy corresponding to the path segment identifier of the node, and records the access control policy in a policy library. Access control policies in the policy library can be persistently stored.

For example, the access control policy can be configured by a local node. That is, the access control policy a1 can be configured at the intermediate node P2, and the matching condition of the access control policy a1 is a value or a value range of a specific field attribute in the path segment identifier, or a combination of values of several specific field attributes or a combination of value ranges of several specific field attributes. The matching action of the access control policy a1 is used to cause the intermediate node P2 to send the data packet to the service node 1. In addition, the access control policy a2 can be configured at the intermediate node P4. The matching condition of the access control policy a2 is a value or a value range of a specific field attribute in the path segment identifier, or a combination of values of several specific field attributes or a combination of value ranges of several specific field attributes. The matching action of the access control policy a2 is used to cause the intermediate node P4 to send the data packet to the service node 2. After obtaining the access control policy a1, the intermediate node P2 can record the access control policy a1 in the policy library. After obtaining the access control policy a2, the intermediate node P4 can record the access control policy a2 in the policy library.

Manner 2: a node can receive an access control policy corresponding to the path segment identifier of the node sent by a controller, and records the access control policy in a policy library.

For example, the access control policy can be configured by the controller, as shown in FIG. 6A, which is a schematic diagram of a controller configuring an access control policy, and the process can include steps 611 to 614.

In step 611, one or more access control policies corresponding to the path segment identifier is configured at a controller.

For example, the access control policy a1 for the path segment identifier is configured at the controller, and the access control policy a2 for the path segment identifier is configured at the controller. For the contents of the access control policy a1 and the access control policy a2, please refer to manner 1, will not be repeated herein.

In step 612, the controller sends the access control policies corresponding to the path segment identifier to nodes connected to one or more service nodes.

For example, the controller sends the access control policy a1 to the intermediate node P2, and the access control policy a1 is used to cause the intermediate node P2 to send the data packet to the service node 1. The controller sends the access control policy a2 to the intermediate node P4, and the access control policy a2 is used to cause the intermediate node P4 to send the data packet to the service node 2.

In step 613, after receiving the access control policies corresponding to the path segment identifier, the nodes send successful configuration responses to the controller.

For example, after receiving the access control policy a1 corresponding to the path segment identifier, the intermediate node P2 sends a successful configuration response to the controller, which indicates that the access control policy a1 has been successfully configured for the path segment identifier. After receiving the access control policy a2 corresponding to the path segment identifier, the intermediate node P4 sends a successful configuration response to the controller, which indicates that the access control policy a2 has been successfully configured for the path segment identifier.

In step 614, the nodes record the access control policies in the policy library. For example, after obtaining the access control policy a1, the intermediate node P2 can record the access control policy a1 in the policy library. After obtaining the access control policy a2, the intermediate node P4 can record the access control policy a2 in the policy library.

In manner 2, the access control policies are configured by the controller, which uniformly configures the access control policies for the path segment identifier of respective nodes, and distributes the access control policies for the path segment identifier of the respective nodes to the respective nodes through a control interface protocol, thereby realizing access control for traffic paths of the respective nodes.

Manner 3: after obtaining the data packet and obtaining the path segment identifier from the segment routing header of the data packet, a node sends the path segment identifier to a third-party device, so that the third-party device queries for the access control policy corresponding to the path segment identifier. The node can receive the access control policy and record the access control policy corresponding to the path segment identifier in a session entry.

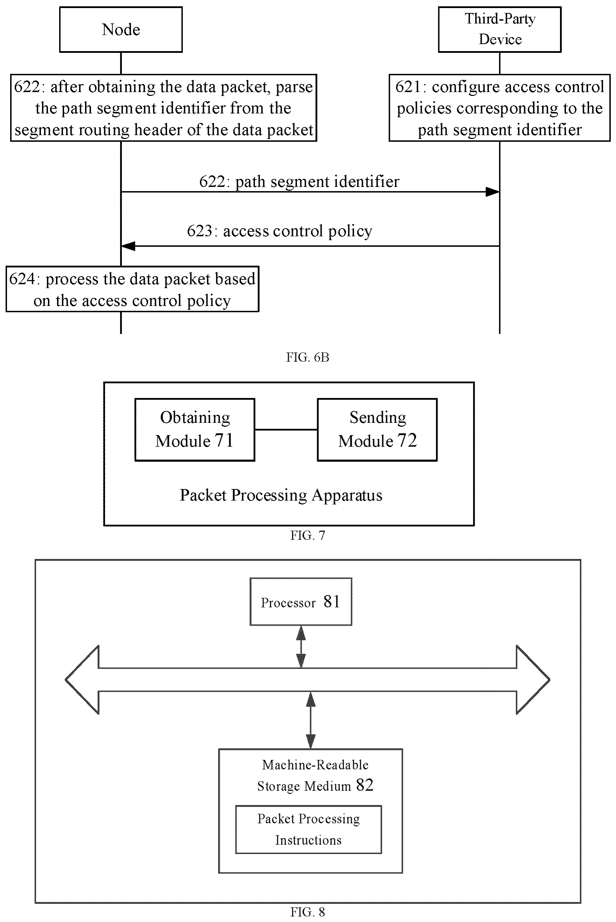

For example, the access control policy can be configured by the third-party device, as shown in FIG. 6B, which is a schematic diagram of a third-party device configuring an access control policy. The process can include steps 621 to 624.

In step 621, one or more access control policies corresponding to the path segment identifier is configured at a third-party device.

For example, the access control policy a1 corresponding to the path segment identifier is configured at the third-party device, and the access control policy a2 corresponding to the path segment identifier is configured at the third-party device.

In an example, the third-party device can be an admission server, a policy server, etc.

In step 622, after obtaining the data packet and obtaining the path segment identifier from the segment routing header of the data packet, one or more nodes send the path segment identifier to the third-party device.

Regarding the process of the nodes obtaining the path segment identifier from the segment routing header, please refer to the subsequent embodiments. In manner 3, the access control policies are obtained based on the data packet trigger.

For example, after receiving the data packet, the head-end node, the intermediate nodes, and the tail-end node obtain the path segment identifier from the segment routing header of the data packet, and send the path segment identifier to the third-party device.

In step 623, the third-party device queries access control policies corresponding to the path segment identifier of the nodes, and sends the access control policies corresponding to the path segment identifier to nodes connected to one or more service nodes.

After receiving the path segment identifier of the intermediate node P2, the third-party device finds the access control policy a1 corresponding to the path segment identifier and sends the access control policy a1 to the intermediate node P2. The matching action of the access control policy a1 is used to cause the intermediate node P2 to send the data packet to the service node 1.

After receiving the path segment identifier of the intermediate node P4, the third-party device finds the access control policy a2 corresponding to the path segment identifier and sends the access control policy a2 to the intermediate node P4. The matching action of the access control policy a2 is used to cause the intermediate node P4 to send the data packet to the service node 2.

In step 624, after receiving the access control policies corresponding to the path segment identifier, the nodes record the access control policies corresponding to the path segment identifier in the session entry, and process the data packet based on matching actions of the access control policies. For example, after receiving the access control policy a1, the intermediate node P2 records the access control policy a1 corresponding to the path segment identifier in the session entry, and sends the data packet to the service node 1 based on the matching action of the access control policy a1. After receiving the access control policy a2, the intermediate node P4 records the access control policy a2 corresponding to the path segment identifier in the session entry, and sends the data packet to the service node 2 based on the matching action of the access control policy a2.

In manner 3, the access control policies are configured by the third-party device, which configures the access control policies based on the path segment identifier. When the data packet passes through respective nodes, the respective nodes extract the path segment identifier from the data packet and send the path segment identifier to the third-party device. The third-party device perform policy authentication based on the path segment identifier, and sends the access control policies to nodes, so that the nodes process the data packet based on the access control policies, thereby realizing access control for traffic paths of respective nodes.

The service nodes for the traffic cleaning services or intrusion prevention services can be deployed by a network device or a network secure device with layer 3 or higher processing capabilities, for example, a layer 3 switch, a router, a firewall.

Fourthly, a packet processing method based on the path segment identifier is proposed.

In the application scenario shown in FIG. 5, the packet processing method may include steps S11 to S24.

In step S11, a head-end node P1 receives a data packet sent by a source node C1, where the data packet is referred to as an inner-layer payload packet, and encapsulates a segment routing header for the inner-layer payload packet to obtain a data packet.

In an example, when encapsulating the segment routing header, the segment routing header may include a path segment identifier and a segment list, and the segment list may include identification information of a tail-end node (such as an IPv6 address), identification information of one or more intermediate nodes, and identification information of the head-end node. When encapsulating the segment routing header, the segment routing header may also include a designated flag (such as a P-flag), and the designated flag is a first value, where the first value indicates that the path segment identifier is included in the segment routing header. As shown in FIG. 3C, which is a schematic structural diagram of a segment routing header encapsulated by the head-end node P1. There is no limitation on the segment routing header.

In step S12, the head-end node P1 sends the data packet to an intermediate node P2 based on the segment routing header.

In step S13, the intermediate node P2 receives the data packet sent by the head-end node P1, which includes the segment routing header and the inner-layer payload packet, and obtains the path segment identifier from the segment routing header.

When obtaining the path segment identifier from the segment routing header, the intermediate node P2 first obtains the designated flag (such as the P-flag) from the segment routing header. If the designated flag is the first value (such as 1), the intermediate node P2 can obtain the path segment identifier from the segment routing header. If the designated flag is a second value (such as 0), the intermediate node P2 does not obtain the path segment identifier from the segment routing header.

In step S14, the intermediate node P2 queries whether there is an access control policy corresponding to the path segment identifier in a session entry. If yes, the intermediate node P2 obtains the access control policy corresponding to the path segment identifier from the session entry. If not, the access control policy corresponding to the path segment identifier can be obtained as follows.

For manners 1 and 2 in the third point, the intermediate node P2 queries whether there is an access control policy corresponding to the path segment identifier in a policy library of the node. If yes, the intermediate node P2 can obtain the access control policy corresponding to the path segment identifier from the policy library and record the access control policy corresponding to the path segment identifier in the session entry. In this way, for subsequent data packets, the access control policy corresponding to the path segment identifier can be obtained from the session entry. A session entry is a temporary entry. If the data packet for the session entry is not received within a preset time, the session entry can be deleted to save memory resources.

If not, the intermediate node P2 cannot obtain the access control policy from the policy library, that is, the access control policy cannot be obtained. Taking the intermediate node P2 obtaining the access control policy a1 as an example.

For manner 3 in the third point, the intermediate node P2 can send the path segment identifier to a third-party device, so that third-party device queries for the access control policy corresponding to the path segment identifier. If the third-party device has the access control policy corresponding to the path segment identifier, the third-party device can send the access control policy to the intermediate node P2. The intermediate node P2 can obtain the access control policy and record the access control policy corresponding to the path segment identifier in the session entry. In this way, for subsequent data packets, the access control policy corresponding to the path segment identifier can be obtained from the session entry. If the third-party device does not have the access control policy corresponding to the path segment identifier, the intermediate node P2 cannot obtain the access control policy.

In step S15, if the intermediate node P2 can find the access control policy corresponding to the path segment identifier, the intermediate node P2 will process the data packet based on the access control policy. If the intermediate node P2 does not find the access control policy corresponding to the path segment identifier, the intermediate node P2 will send the data packet to an intermediate node P4 based on the segment routing header.

When the intermediate node P2 processes the data packet based on the access control policy, if the access control policy includes path information which is used to send the data packet to a service node 1, the intermediate node P2 will send the data packet to the service node 1 based on the access control policy, so that the service node 1 can perform secure processing on the data packet. If the intermediate node P2 receives the data packet returned by service node 1, the intermediate node P2 will send the data packet based on the segment routing header of the data packet, that is, the intermediate node P2 will send the data packet to the intermediate node P4 based on the segment routing header.

For example, since the access control policy a1 is used to make the intermediate node P2 send the data packet to the service node 1, the content of the access control policy a1 is not limited as long as the access control policy a1 can make the data packet be sent to the service node 1, the intermediate node P2 can send the data packet to the service node 1.

After receiving the data packet, the service node 1 can perform secure processing on the data packet. For example, if the service node 1 is used to implement traffic cleaning services, the service node 1 can perform traffic cleaning on the data packet, and there is no limitation on the traffic cleaning process. If the data packet passes the traffic cleaning, the service node 1 can send the data packet to the intermediate node P2. If the data packet fails to pass the traffic cleaning, the service node 1 filters the data packet and does not send the data packet to the intermediate node P2.

After receiving the data packet returned by the service node 1, the intermediate node P2 can send the data packet to the intermediate node P4 based on the segment routing header.

When sending the data packet to the service node 1, the intermediate node P2 can remove the segment routing header of the data packet, that is, the intermediate node P2 can send the data packet without the segment routing header to the service node 1. After receiving the data packet returned by the service node 1, the intermediate node P2 can recover the segment routing header of the data packet, that is, the intermediate node P2 can re-encapsulate the segment routing header into the data packet.

When the intermediate node P2 processes the data packet based on the access control policy, if the access control policy is a release policy, the intermediate node P2 can send the data packet based on the segment routing header of the data packet, that is, the intermediate node P2 can send the data packet to the intermediate node P4 based on the segment routing header.

When the intermediate node P2 processes the data packet based on the access control policy, if the access control policy is a discard policy, the intermediate node P2 discards the data packet and does not forward the data packet.

In an example, before step S14, the intermediate node P2 can obtain a second target attribute feature from all attribute features of the path segment identifier. The second target attribute feature is used to indicate an application scenario corresponding to the path segment identifier, for example, the second target attribute feature can be the sixth identifier in the path segment identifier.

If the application scenario corresponding to the path segment identifier indicated by the sixth identifier is a secure access control scenario, step S14 can be executed. That is, the intermediate node P2 queries whether there is the access control policy corresponding to the path segment identifier in the session entry. If the application scenario corresponding to the path segment identifier indicated by the sixth identifier is not an access control scenario, for example, the application scenario is a path performance measurement scenario, or a bidirectional path binding scenario, or an end-to-end path protection scenario, the intermediate node P2 directly sends the data packet to the intermediate node P4 based on the segment routing header, without querying whether there is the access control policy corresponding to the path segment identifier in the session entry.

In an example, when the intermediate node P2 obtains the access control policy corresponding to the path segment identifier, if a matching condition of the access control policy includes the path segment identifier, the intermediate node P2 queries for the matching condition of the access control policy based on the path segment identifier in the data packet. If the path segment identifier in the data packet matches the path segment identifier in the matching condition, it indicates that the access control policy corresponds to the path segment identifier.

If the matching condition of the access control policy includes an attribute feature value, a first target attribute feature can be obtained from all attribute features of the path segment identifier of the data packet. On this basis,
if the first target attribute feature matches the attribute feature value in the matching condition, the access control policy corresponds to the first target attribute feature, that is, the access control policy corresponds to the path segment identifier;
if the first target attribute feature does not match the attribute feature value in the matching condition, the access control policy does not correspond to the first target attribute feature, that is, the access control policy does not correspond to the path segment identifier.

For example, if the attribute feature value in the matching condition is a segment routing policy identifier, the segment routing policy identifier (i.e., the first target attribute feature) can be obtained from all attribute features of the path segment identifier of the data packet. In this way, if the segment routing policy identifier is the same as the attribute feature value in the matching condition, the access control policy corresponds to the path segment identifier. Or, if the segment routing policy identifier is different form the attribute feature value in the matching condition, the access control policy does not correspond to the path segment identifier.

For another example, if the attribute feature value in the matching condition is a segment routing path identifier, the segment routing path identifier (i.e., the first target attribute feature) can be obtained from all attribute features of the path segment identifier of the data packet. In this way, if the segment routing path identifier is the same as the attribute feature value in the matching condition, the access control policy corresponds to the path segment identifier. Or, if the segment routing path identifier is different form the attribute feature value in the matching conditions, the access control policy does not correspond to the path segment identifier.

If the matching condition of the access control policy includes an attribute feature value interval, the first target attribute feature can be obtained from all attribute features of the path segment identifier of the data packet. On this basis,
if the first target attribute feature is within the attribute feature value interval of the matching condition, the access control policy corresponds to the first target attribute feature, that is, the access control policy corresponds to the path segment identifier.

If the first target attribute feature is not within the attribute feature value interval of the matching condition, the access control policy does not correspond to the first target attribute feature, that is, the access control policy does not correspond to the path segment identifier.

For example, if the attribute feature value interval in the matching condition is a segment routing policy identifier interval, a segment routing policy identifier (i.e., the first target attribute feature) can be obtained from all the attribute features of the path segment identifier of the data packet. In this way, if the segment routing policy identifier is within the segment routing policy identifier interval, the access control policy corresponds to the path segment identifier. Or, if the segment routing policy identifier is not within the segment routing policy identifier interval, the access control policy does not correspond to the path segment identifier.

In an example, the first target attribute feature includes a candidate path identifier, and the candidate path identifier is used to indicate a candidate path to which a path segment belongs. The attribute feature value of the matching condition can include one or more specified network nodes. Based on this, if the candidate path indicated by the candidate path identifier includes the specified network nodes, the first target attribute feature matches the attribute feature value. Otherwise, the first target attribute feature does not match the attribute feature value.

For example, the attribute feature value of the matching condition can include the intermediate node P2 (i.e., the specified network node), that is, only data packets that pass through the intermediate node P2 can be matched with the access control policy, while data packets that do not pass through the intermediate node P2 cannot be matched with the access control policy. On this basis, the candidate path identifier (i.e., the first target attribute feature) can be obtained from all attribute features of the path segment identifier of the data packet, and the candidate path identifier is used to indicate a candidate path to which a path segment belongs. The candidate path is a set of path segments with certain same attributes. If the set passes through the intermediate node P2, it means that the data packet will pass through the intermediate node P2. The first target attribute feature matches the attribute feature value in the matching condition, and the access control policy corresponds to the first target attribute feature. That is, the access control policy corresponds to the path segment identifier. In addition, if the set does not pass through the intermediate node P2, it means that the data packet will not pass through the intermediate node P2. In this case, the access control policy does not correspond to the path segment identifier.

In step S16, the intermediate node P4 receives the data packet sent by the intermediate node P2, where the data packet includes the segment routing header and the inner-layer payload packet, and obtains the path segment identifier from the segment routing header.

In step S17, the intermediate node P4 queries whether there is an access control policy corresponding to the path segment identifier in a session entry. If yes, the intermediate node P4 obtains the access control policy corresponding to the path segment identifier from the session entry. If not, the access control policy corresponding to the path segment identifier can be obtained from a policy library, or the access control policy corresponding to the path segment identifier can be obtained from a third-party device.

In step S18, if the intermediate node P4 can find the access control policy corresponding to the path segment identifier, the intermediate node P4 processes the data packet based on the access control policy. If the intermediate node P4 does not find the access control policy corresponding to the path segment identifier, the intermediate node P4 sends the data packet to the intermediate node P6 based on the segment routing header.

The processing procedure of the intermediate node P4 is similar to that of the intermediate node P2, and will not be repeated herein.

In step S19, the intermediate node P6 receives the data packet sent by the intermediate node P4, where the data packet includes the segment routing header and the inner-layer payload packet, and obtains the path segment identifier from the segment routing header.

In step S20, the intermediate node P6 queries whether there is an access control policy corresponding to the path segment identifier in a session entry. If yes, the intermediate node P6 obtains the access control policy corresponding to the path segment identifier from the session entry. If not, the access control policy corresponding to the path segment identifier can be obtained from a policy library, or the access control policy corresponding to the path segment identifier can be obtained from a third-party device.

In step S21, if the intermediate node P6 can find the access control policy corresponding to the path segment identifier, the intermediate node P6 processes the data packet based on the access control policy. If the intermediate node P6 does not find the access control policy corresponding to the path segment identifier, the intermediate node P6 sends the data packet to the tail-end node P8 based on the segment routing header.

The processing procedure of the intermediate node P6 is similar to that of the intermediate node P2, except that the intermediate node P6 does not find the access control policy corresponding to the path segment identifier.

In step S22, the tail-end node P8 receives the data packet sent by the intermediate node P6, where the data packet includes the segment routing header and the inner-layer payload packet, and obtains the path segment identifier from the segment routing header.

In step S23, the tail-end node P8 queries whether there is an access control policy corresponding to the path segment identifier in a session entry. If yes, the tail-end node P8 obtains the access control policy corresponding to the path segment identifier from the session entry. If not, the access control policy corresponding to the path segment identifier can be obtained from a policy library, or the access control policy corresponding to the path segment identifier can be obtained from a third-party device.

In step S24, if the tail-end node P8 can find the access control policy corresponding to the path segment identifier, the tail-end node P8 processes the data packet based on the access control policy. If the tail-end node P8 does not find the access control policy corresponding to the path segment identifier, the tail-end node P8 sends the data packet to a destination node S1 based on the segment routing header.

So far, the data packet is successfully sent to the destination node S1, completing the transmission process of the data packet.

In an example, the above access control method based on the path segment identifier can be conveniently applied to scenarios such as network service function chain (SFC) or secure service function chain (SFC). In the network service function chain or the secure service function chain based SRv6, an SRv6 segment identifier (SID) is allocated to each service function forwarder (SFF) and SR-aware service function (SF), and the service chain is described by an SRv6 SID list. The SF can be SR-aware or SR-unware. For the SR-unware SF, it is necessary to deploy an SR Proxy, which will remove the SRH of the data packet and continue to send the data packet to the SF, and restore the SRH after receiving the data packet processed by the SF.

In the network service function chain or the secure service function chain based SRv6, access control of the data packet can be implemented based on the path segment identifier. For example, as shown in FIG. 5, the intermediate node P2 configures the access control policy a1 based on the path segment identifier, and then sends the data packet to the service node 1. The intermediate node P4 configures the access control policy a2 based on the path segment identifier, and then sends the data packet to the service node 2.

In an example, the destination node S1 performs local policy control based on its own secure requirements, requiring that all access traffic needs to pass through traffic cleaning services and intrusion prevention services. That is, a data packet that passes through the traffic cleaning services and the intrusion prevention services can only access the destination node S1. Based on this, the data packet needs to go through both the service node 1 for the traffic cleaning services and the service node 2 for the intrusion prevention services.

Based on this, the tail-end node P8 can configure a secure policy based on the path segment identifier. The secure policy is used to check whether a forwarding path of the data packet passes through one or more designated type nodes, such as the intermediate node P2 and the intermediate node P4. For example, on the tail-end node P8, an access control policy a3 can be configured for the path segment identifier of the segment list (P2, P4, P6, P8), and the corresponding matching action can be set to be release. An access control policy a4 can be configured for the path segment identifier of the segment list (P3, P5, P7, P8), and the corresponding matching action can be set to be blocking.

If the forwarding path of the data packet passes through designated type nodes, that is, the forwarding path of the data packet includes the head-end node P1, the intermediate node P2, the intermediate node P4, the intermediate node P6, and the tail-end node P8, then the tail-end node P8 can obtain one or more attribute values of the path segment identifier from the segment routing header of the data packet. The access control policy a3 is matched based on the attribute values of the path segment identifier. The tail-end node P8 performs the matching action of the access control policy a3, that is, sends the data packet to the destination node S1.

If the forwarding path of the data packet does not pass through designated type nodes, that is, the forwarding path of the data packet includes the head-end node P1, the intermediate node P3, the intermediate node P5, the intermediate node P7, and the tail-end node P8, then the tail-end node P8 can obtain one or more attribute values of the path segment identifier from the segment routing header of the data packet. The access control policy a4 is matched based on the attribute values of the path segment identifier. The tail-end node P8 performs the matching action of the access control policy a4, that is, discards the data packet. Then, the tail-end node P8 can also send the reason why the path feedback data packet is discarded to the head-end node P1. After receiving the feedback information, the head-end node P1 can re-designate a forwarding path so that the forwarding path passes through the designated type nodes. That is, the head-end node P1 can designate the forwarding path as "head-end node P1-intermediate node P2-intermediate node P4-intermediate node P5-tail-end node P8".

Based on the above processing, since the access control policy a3 configured for the path segment identifier of the segment list (P2, P4, P6, P8) allows the data packet to pass through the intermediate node P2 and the intermediate node P4, when the forwarding path is the "head-end node P1-intermediate node P2-intermediate node P4-intermediate node P5-tail-end node P8", the data packet is allowed to pass through, and the tail-end node P8 sends the data packet to the destination node S1. When the forwarding path is "head-end node P1-intermediate node P3-intermediate node P5-intermediate node P7-tail-end node P8", since the access control policy a4 configured for the path segment identifier of the segment list (P3, P5, P7, P8) does not allow the data packet to pass through, the tail-end node P8 does not send the data packet to the destination node S1.

For each node, when the node sends the data packet based on the segment routing header, a Last Entry field (used to represent an index of the last element in the segment list) of the segment routing header is detected. If the content in the Last Entry field is the same as the identifier of the node, it means that the node is the last node in the segment list, and the node sends the inner-layer payload packet after the segment routing header to the destination node S1. If the content in the Last Entry field is different from the identifier of the node, it means that the node is not the last node in the segment list, and the node continues to forward the data packet based on the segment routing header, and so on.

In an example, in the method for configuring an access control policy, the path segment identifier can be replaced with a network layer data session flow attribute identifier and the path segment identifier. That is, the matching condition of the access control policy is related to the network layer data session flow attribute identifier and THE path segment identifier, or related to one or more attribute values of the network layer data session flow attribute identifier and one or more attribute values of the path segment identifier. In the packet processing method based on the path segment identifier, the path segment identifier can be replaced with the network layer data session flow attribute identifier and the path segment identifier. For example, it is determined whether there is an access control policy corresponding to the network layer data session flow attribute identifier and the path segment identifier.

In an example, the network layer data session flow attribute identifier may include at least one of the following.

A source address. In addition to the segment routing header and the inner payload packet, an outer layer of the data packet is also encapsulated with an IPv6 packet header. The IPv6 packet header includes a source address of the data packet, i.e., an IP address of the source node C1. Based on this, for the head-end node, the intermediate nodes, and the tail-end node, the source address can be obtained from the IPv6 packet header.

A traffic type. In addition to the segment routing header and the inner payload packet, an outer layer of the data packet is also encapsulated with an IPv6 packet header. The IPv6 packet header includes a traffic type of the data packet. Based on this, for the head-end node, the intermediate nodes, and the tail-end node, the traffic type can be obtained from the IPv6 packet header.

A traffic identifier. In addition to the segment routing header and the inner payload packet, an outer layer of the data packet is also encapsulated with an IPv6 packet header. The IPv6 packet header includes a traffic identifier of the data packet. Based on this, for the head-end node, the intermediate nodes, and the tail-end node, the traffic identifier can be obtained from the IPv6 packet header.

An ingress address. The data packet is encapsulated with the segment routing header, and the segment routing header includes identification information (i.e., ingress address) of the head-end node. Based on this, for the head-end node, the intermediate nodes, and the tail-end node, the ingress address can be obtained from the segment routing header. For example, the ingress address is obtained from the last segment List[n] of the segment list of the segment routing header. For example, in the path segment type identifier field of the path segment identifier, the third identifier is used to indicate whether the segment routing header includes the identification information of the head-end node or does not include the identification information of the head-end node. Based on this, if the third identifier is used to indicate that the segment routing header includes the identification information of the head-end node, the identification information of the head-end node can be obtained from the segment routing header, and the identification information of the head-end node is the ingress address.

An egress address. The data packet is encapsulated with the segment routing header, and the segment routing header includes identification information (i.e., egress address) of the tail-end node. Based on this, for the head-end node, the intermediate nodes, and the tail-end node, the egress address can be obtained from the segment routing header. For example, the egress address is obtained from the first segment List[0] of the segment list of the segment routing header.

A routing type. The data packet is encapsulated with the segment routing header, and the segment routing header includes a routing type (used to indicate a type of a routing header), as shown in FIG. 3C. Based on this, for the head-end node, the intermediate nodes, and the tail-end node, the routing type can be obtained from the segment routing header.

A data identifier. The data packet is encapsulated with the segment routing header, which includes a data identifier. For the head-end node, the intermediate nodes, and the tail-end node, the data identifier is obtained from the segment routing header.

From the above, it can be seen that the network layer data session flow attribute identifier can include at least one of the source address, the traffic type, the traffic identifier, the ingress address, the egress address, the routing type, and the data identifier. In addition to the above content, inner-layer session information of the segment routing header can also be obtained, that is, information of the inner-layer payload packet can be obtained, for example, session attributes such as a destination address, a source port number, a target port number, and a protocol type. The network layer data session flow attribute identifier can also include at least one of the destination address, the source port number, the target port number, and the protocol type.

From the above technical solution, it can be seen that in the embodiments of the present disclosure, the path segment identifier is obtained from the segment routing header of the data packet, and the data packet is sent to one or more service nodes based on one or more access control policies corresponding to the path segment identifier, so that the service nodes can perform secure processing on the data packet, thereby providing secure services for the data packet, and transmitting the data packet after secure processing in the network to avoid secure risks to the network.

An access control method based on the path segment identifier is proposed, which provides a new traffic control dimension under segment routing, avoids implementing access control through maintaining and searching for path segment lists with different lengths and lengthy structures, and greatly reduces implementation and maintenance with path segment control policies. A session flow establishment and access control method based on the path segment identifier in a segment routing domain is proposed, which solves the problem of lack of simple and effective control methods for business traffic under segment routing. The application of the segment routing technology in path performance measurement, bidirectional path binding, end-to-end path protection and other scenarios is simplified. A new dimension is provided for the secure control of network secure devices such as switches and firewalls, and difficulties in implementation, maintenance, and management are greatly simplified.

Based on the same application concept as the above method, an embodiment of the present disclosure proposes a packet processing apparatus, which is applied to a network device. The network device serves as a head-end node, an intermediate node, or a tail-end node. As shown in FIG. 7, which is a schematic structural diagram of the packet processing apparatus, the apparatus may include:
an obtaining module 71, configured to obtain a data packet, where the data packet includes a segment routing header; and obtain a path segment identifier from the segment routing header; and
a sending module 72, configured to, if there is an access control policy corresponding to the path segment identifier, and the access control policy includes path information which is configured to send the data packet to a service node, send the data packet to the service node based on the access control policy, so that the service node performs secure processing on the data packet; if the data packet returned by the service node is received, send the data packet based on the segment routing header of the data packet.

In an example, when obtaining the access control policy corresponding to the path segment identifier, the obtaining module 71 is specifically configured to: query for whether there is the access control policy corresponding to the path segment identifier in a session entry;
if yes, obtain the access control policy corresponding to the path segment identifier from the session entry;
if not, and there is the access control policy corresponding to the path segment identifier in a policy library of the network device, obtain the access control policy corresponding to the path segment identifier from the policy library, and record the access control policy corresponding to the path segment identifier into the session entry; where the access control policy in the policy library is configured by a user on the network device, or the access control policy in the policy library is the access control policy corresponding to the path segment identifier of the network device sent by a controller; or
if not, send the path segment identifier to a third-party device, so that the third-party device queries for the access control policy corresponding to the path segment identifier; if the access control policy corresponding to the path segment identifier sent by the third-party device is received, record the access control policy corresponding to the path segment identifier into the session entry.

In an example, the path segment identifier is configured to describe attribute features of a path segment of segment routing, the attribute features are configured for access control on the data packet, and the path segment represents a path segment among a head-end node, one or more intermediate nodes, and a tail-end node; where when obtaining the access control policy corresponding to the path segment identifier, the obtaining module 71 is specifically configured to: obtain a first target attribute feature from all attribute features of the path segment identifier; determine whether there is an access control policy corresponding to the first target attribute feature; if yes, determine the access control policy corresponding to the first target attribute feature as the access control policy corresponding to the path segment identifier; where the access control policy includes a matching condition and a matching action;
if the matching condition includes an attribute feature value and the first target attribute feature matches the attribute feature value, the access control policy corresponds to the first target attribute feature; or
if the matching condition includes an attribute feature value interval and the first target attribute feature is within the attribute feature value interval, the access control policy corresponds to the first target attribute feature.

In an example, the first target attribute feature includes a candidate path identifier which is configured to indicate a candidate path to which the path segment belongs; the attribute feature value of the matching condition includes one or more designated network nodes; where if the candidate path indicated by the candidate path identifier includes the one or more designated network nodes, the first target attribute feature matches the attribute feature value.

In an example, the obtaining module is further configured to: obtain a second target attribute feature from all attribute features of the path segment identifier, where the second target attribute feature is configured to indicate an application scenario corresponding to the path segment identifier; if the application scenario corresponding to the path segment identifier is a secure access control scenario, determine whether there is the access control policy corresponding to the path segment identifier.

In an example, when obtaining the path segment identifier from the segment routing header, the obtaining module 71 is specifically configured to: obtain a designated flag from the segment routing header, where the designated flag is a first value or a second value; where the first value indicates that the path segment identifier is included in the segment routing header, and the second value indicates that the path segment identifier is not included in the segment routing header; if the designated flag is the first value, obtain the path segment identifier from the segment routing header.

In an example, if the network device serves as a head-end node, when obtaining the data packet, the obtaining module 71 is specifically configured to: after receiving an inner-layer payload packet, encapsulate the segment routing header for the inner-layer payload packet to obtain the data packet; where when encapsulating the segment routing header, the segment routing header includes the path segment identifier and a segment list, and the segment list includes identification information of a tail-end node, identification information of one or more intermediate nodes, and identification information of the head-end node.

In an example, if the network device serves as a head-end node, the obtaining module 71 is further configured to:
if a path segment among the head-end node, one or more intermediate nodes, and a tail-end node is generated by the network device, allocate the path segment identifier to the path segment when generating the path segment; publish the path segment identifier to the one or more intermediate nodes and the tail-end node, or publish the path segment identifier to a controller, so that the controller publishes the path segment identifier to the one or more intermediate node and the tail-end node; or, if the path segment among the head-end node, the one or more intermediate nodes, and the tail-end node is generated by a controller, receive a publishing message sent by the controller, where the publishing message includes the path segment identifier, and the path segment identifier is allocated to the path segment by the controller when generating the path segment.

In an example, if the network device serves as a tail-end node, the obtaining module 71 is further configured to:
if the path segment identifier of a path segment among a head-end node, one or more intermediate nodes, and the tail-end node is allocated by the network device, send a path calculation request to the head-end node so that the head-end node generates the path segment; receive the path segment sent by the head-end node and allocate the path segment identifier to the path segment; publish the path segment identifier and the path segment to the one or more intermediate nodes and the head-end node, or publish the path segment identifier and the path segment to a controller, so that the controller publishes the path segment identifier and the path segment to the one or more intermediate node and the head-end node; or
if the path segment identifier of the path segment among the head-end node, the one or more intermediate nodes, and the tail-end node is allocated by the network device, send a path calculation request to a controller so that the controller generates the path segment; receive the path segment sent by the controller and allocate the path segment identifier to the path segment; publish the path segment identifier and the path segment to the one or more intermediate nodes and the head-end node, or publish the path segment identifier and the path segment to the controller, so that the controller publishes the path segment identifier and the path segment to the one or more intermediate node and the head-end node.

In an example, if the network device serves as a tail-end node, the sending module 72 is further configured to:
determine whether a forwarding path of the data packet passes through one or more designated type nodes, where the one or more designated type nodes are nodes that need to send the data packet to the service node based on an access control policy;
if yes, send the data packet based on the segment routing head;
if not, discard the data packet, and send a path update request to a head-end node, so that the head-end node re-designates a forwarding path which passes through the one or more designated type nodes.

In an example, the path segment identifier includes at least one of the following attribute features:
a path segment type identifier, where the path segment type identifier includes at least one of: a first identifier, configured to indicate whether the path segment identifier is a global identifier or a local identifier; a second identifier, configured to indicate whether the path segment identifier is a static path identifier or a dynamic path identifier; a third identifier, configured to indicate whether the segment routing header includes identification information of a head-end node or does not include the identification information of the head-end node; a fourth identifier, configured to indicate contents that needs to be checked; a fifth identifier, configured to indicate a check algorithm; or a sixth identifier, configured to indicate an application scenario corresponding to the path segment identifier;
a segment routing policy identifier, configured to indicate a segment routing policy to which a path segment belongs;
a candidate path identifier, configured to indicate a candidate path to which the path segment belongs;
a segment routing path identifier, configured to indicate a segment list to which the path segment belongs; or
a check value, obtained by checking the contents that needs to be checked indicated by the fourth identifier by using the check algorithm indicated by the fifth identifier.

Based on the same application concept as the above method, an embodiment of the present disclosure proposes a network device. As shown in FIG. 8, the network device includes a processor 81 and a machine-readable storage medium 82. The machine-readable storage medium 82 stores machine executable instructions that can be executed by the processor 81. The processor 81 is used to execute the machine executable instructions to implement the packet processing method disclosed in the above examples of the present disclosure.

Based on the same application concept as the above method, an embodiment of the present disclosure also provides a machine-readable storage medium, which stores several computer instructions. When the computer instructions are executed by a processor, the packet processing method disclosed in the above example of the present disclosure can be implemented.

The above machine-readable storage medium can be any electronic, magnetic, optical, or other physical storage device, and can contain or store information such as executable instructions, data. For example, the machine-readable storage media can be a random access memory (RAM), a volatile memory, a non-volatile memory, a flash memory, a storage drive (such as a hard drive), a solid-state drive, any type of storage disk (such as a CD, a DVD), or a similar storage medium, or a combination thereof.

Based on the same application concept as the above method, an embodiment of the present disclosure also provides a computer program product, including a computer program that implements the above packet processing method when executed by a processor.

The persons skilled in the art should understand that the examples of the present disclosure can be provided as a method, a system, or a computer program product. Thus, entire hardware examples, entire software examples or examples combining software and hardware can be adopted in the present disclosure. Further, the examples of the present disclosure can be implemented in the form of a computer program product that is operated on one or more computer available storage media (including but not limited to magnetic disk memory, CD-ROM, and optical memory and so on) including computer available program codes.

The foregoing descriptions are made to embodiments of the present disclosure but not intended to limit the present disclosure. For those skilled in the art, various modifications and variations can be made to the present disclosure. Any modifications, equivalent substitutions and improvements made within the spirit and principle of the present disclosure shall all fall within the scope of protection of the present disclosure.

## Claims

1. A packet processing method, applied to a network device, the method comprising:
obtaining a data packet, wherein the data packet comprises a segment routing header;
obtaining a path segment identifier from the segment routing header;
if there is an access control policy corresponding to the path segment identifier, and the access control policy comprises path information which is configured to send the data packet to a service node, sending the data packet to the service node based on the access control policy, so that the service node performs secure processing on the data packet;
if the data packet returned by the service node is received, sending the data packet based on the segment routing header of the data packet.

2. The method according to claim 1, wherein there being the access control policy corresponding to the path segment identifier comprises:
querying for whether there is the access control policy corresponding to the path segment identifier in a session entry;
if yes, obtaining the access control policy corresponding to the path segment identifier from the session entry;
if not, and there is the access control policy corresponding to the path segment identifier in a policy library of the network device, obtaining the access control policy corresponding to the path segment identifier from the policy library, and recording the access control policy corresponding to the path segment identifier into the session entry; wherein the access control policy in the policy library is configured by a user on the network device, or the access control policy in the policy library is the access control policy corresponding to the path segment identifier of the network device sent by a controller; or
if not, sending the path segment identifier to a third-party device, so that the third-party device queries for the access control policy corresponding to the path segment identifier; if the access control policy corresponding to the path segment identifier sent by the third-party device is received, recording the access control policy corresponding to the path segment identifier into the session entry.

3. The method according to claim 1 or 2, wherein the path segment identifier is configured to describe attribute features of a path segment of segment routing, the attribute features are configured for access control on the data packet, and the path segment represents a path segment among a head-end node, one or more intermediate nodes, and a tail-end node;
wherein there being the access control policy corresponding to the path segment identifier comprises:
obtaining a first target attribute feature from all attribute features of the path segment identifier;
determining whether there is an access control policy corresponding to the first target attribute feature;
if yes, determining the access control policy corresponding to the first target attribute feature as the access control policy corresponding to the path segment identifier;
wherein the access control policy comprises a matching condition and a matching action;
if the matching condition comprises an attribute feature value and the first target attribute feature matches the attribute feature value, the access control policy corresponds to the first target attribute feature; or
if the matching condition comprises an attribute feature value interval and the first target attribute feature is within the attribute feature value interval, the access control policy corresponds to the first target attribute feature.

4. The method according to claim 3, wherein the first target attribute feature comprises a candidate path identifier which is configured to indicate a candidate path to which the path segment belongs; the attribute feature value of the matching condition comprises one or more designated network nodes;
wherein if the candidate path indicated by the candidate path identifier comprises the one or more designated network nodes, the first target attribute feature matches the attribute feature value.

5. The method according to claim 1 or 2, wherein a process of determining whether there is the access control policy corresponding to the path segment identifier comprises:
obtaining a second target attribute feature from all attribute features of the path segment identifier, wherein the second target attribute feature is configured to indicate an application scenario corresponding to the path segment identifier;
if the application scenario corresponding to the path segment identifier is a secure access control scenario, determining whether there is the access control policy corresponding to the path segment identifier.

6. The method according to claim 1, wherein obtaining the path segment identifier from the segment routing header comprises:
obtaining a designated flag from the segment routing header, wherein the designated flag is a first value or a second value; wherein the first value indicates that the path segment identifier is included in the segment routing header, and the second value indicates that the path segment identifier is not included in the segment routing header;
if the designated flag is the first value, obtaining the path segment identifier from the segment routing header.

7. The method according to claim 1, wherein if the network device serves as a head-end node, obtaining the data packet comprises:
after receiving an inner-layer payload packet, encapsulating the segment routing header for the inner-layer payload packet to obtain the data packet; wherein when encapsulating the segment routing header, the segment routing header comprises the path segment identifier and a segment list, and the segment list comprises identification information of a tail-end node, identification information of one or more intermediate nodes, and identification information of the head-end node.

8. The method according to claim 1, wherein if the network device serves as a head-end node, the method further comprises:
if a path segment among the head-end node, one or more intermediate nodes, and a tail-end node is generated by the network device, allocating the path segment identifier to the path segment when generating the path segment; publishing the path segment identifier to the one or more intermediate nodes and the tail-end node, or publishing the path segment identifier to a controller, so that the controller publishes the path segment identifier to the one or more intermediate node and the tail-end node; or
if the path segment among the head-end node, the one or more intermediate nodes, and the tail-end node is generated by a controller, receiving a publishing message sent by the controller, wherein the publishing message comprises the path segment identifier, and the path segment identifier is allocated to the path segment by the controller when generating the path segment.

9. The method according to claim 1, wherein if the network device serves as a tail-end node, the method further comprises:
if the path segment identifier of a path segment among a head-end node, one or more intermediate nodes, and the tail-end node is allocated by the network device, sending a path calculation request to the head-end node so that the head-end node generates the path segment; receiving the path segment sent by the head-end node and allocating the path segment identifier to the path segment; publishing the path segment identifier and the path segment to the one or more intermediate nodes and the head-end node, or publishing the path segment identifier and the path segment to a controller, so that the controller publishes the path segment identifier and the path segment to the one or more intermediate node and the head-end node; or
if the path segment identifier of the path segment among the head-end node, the one or more intermediate nodes, and the tail-end node is allocated by the network device, sending a path calculation request to a controller so that the controller generates the path segment; receiving the path segment sent by the controller and allocating the path segment identifier to the path segment; publishing the path segment identifier and the path segment to the one or more intermediate nodes and the head-end node, or publishing the path segment identifier and the path segment to the controller, so that the controller publishes the path segment identifier and the path segment to the one or more intermediate node and the head-end node.

10. The method according to claim 1, wherein if the network device serves as a tail-end node, the method further comprises:
determining whether a forwarding path of the data packet passes through one or more designated type nodes, wherein the one or more designated type nodes are nodes that need to send the data packet to the service node based on an access control policy;
if yes, sending the data packet based on the segment routing head;
if not, discarding the data packet, and sending a path update request to a head-end node, so that the head-end node re-designates a forwarding path which passes through the one or more designated type nodes.

11. The method according to claim 3, wherein the path segment identifier comprises at least one of the following attribute features:
a path segment type identifier, wherein the path segment type identifier comprises at least one of: a first identifier, configured to indicate whether the path segment identifier is a global identifier or a local identifier; a second identifier, configured to indicate whether the path segment identifier is a static path identifier or a dynamic path identifier; a third identifier, configured to indicate whether the segment routing header comprises identification information of a head-end node or does not comprise the identification information of the head-end node; a fourth identifier, configured to indicate contents that needs to be checked; a fifth identifier, configured to indicate a check algorithm; or a sixth identifier, configured to indicate an application scenario corresponding to the path segment identifier;
a segment routing policy identifier, configured to indicate a segment routing policy to which a path segment belongs;
a candidate path identifier, configured to indicate a candidate path to which the path segment belongs;
a segment routing path identifier, configured to indicate a segment list to which the path segment belongs; or
a check value, obtained by checking the contents that needs to be checked indicated by the fourth identifier by using the check algorithm indicated by the fifth identifier.

12. A packet processing apparatus, applied to network device, the apparatus comprising:
an obtaining module, configured to obtain a data packet, wherein the data packet comprises a segment routing header; and obtain a path segment identifier from the segment routing header; and
a sending module, configured to, if there is an access control policy corresponding to the path segment identifier, and the access control policy comprises path information which is configured to send the data packet to a service node, send the data packet to the service node based on the access control policy, so that the service node performs secure processing on the data packet; if the data packet returned by the service node is received, send the data packet based on the segment routing header of the data packet.

13. The apparatus according to claim 12, wherein when obtaining the access control policy corresponding to the path segment identifier, the obtaining module is specifically configured to:
query for whether there is the access control policy corresponding to the path segment identifier in a session entry;
if yes, obtain the access control policy corresponding to the path segment identifier from the session entry;
if not, and there is the access control policy corresponding to the path segment identifier in a policy library of the network device, obtain the access control policy corresponding to the path segment identifier from the policy library, and record the access control policy corresponding to the path segment identifier into the session entry; wherein the access control policy in the policy library is configured by a user on the network device, or the access control policy in the policy library is the access control policy corresponding to the path segment identifier of the network device sent by a controller; or
if not, send the path segment identifier to a third-party device, so that the third-party device queries for the access control policy corresponding to the path segment identifier; if the access control policy corresponding to the path segment identifier sent by the third-party device is received, record the access control policy corresponding to the path segment identifier into the session entry.

14. The apparatus according to claim 12 or 13, wherein the path segment identifier is configured to describe attribute features of a path segment of segment routing, the attribute features are configured for access control on the data packet, and the path segment represents a path segment among a head-end node, one or more intermediate nodes, and a tail-end node;
wherein when obtaining the access control policy corresponding to the path segment identifier, the obtaining module is specifically configured to:
obtain a first target attribute feature from all attribute features of the path segment identifier;
determine whether there is an access control policy corresponding to the first target attribute feature;
if yes, determine the access control policy corresponding to the first target attribute feature as the access control policy corresponding to the path segment identifier;
wherein the access control policy comprises a matching condition and a matching action;
if the matching condition comprises an attribute feature value and the first target attribute feature matches the attribute feature value, the access control policy corresponds to the first target attribute feature; or
if the matching condition comprises an attribute feature value interval and the first target attribute feature is within the attribute feature value interval, the access control policy corresponds to the first target attribute feature.

15. The apparatus according to claim 14, wherein the first target attribute feature comprises a candidate path identifier which is configured to indicate a candidate path to which the path segment belongs; the attribute feature value of the matching condition comprises one or more designated network nodes;
wherein if the candidate path indicated by the candidate path identifier comprises the one or more designated network nodes, the first target attribute feature matches the attribute feature value.

16. The apparatus according to claim 12 or 13, wherein the obtaining module is further configured to:
obtain a second target attribute feature from all attribute features of the path segment identifier, wherein the second target attribute feature is configured to indicate an application scenario corresponding to the path segment identifier;
if the application scenario corresponding to the path segment identifier is a secure access control scenario, determine whether there is the access control policy corresponding to the path segment identifier.

17. The apparatus according to claim 12, wherein when obtaining the path segment identifier from the segment routing header, the obtaining module is specifically configured to:
obtain a designated flag from the segment routing header, wherein the designated flag is a first value or a second value; wherein the first value indicates that the path segment identifier is included in the segment routing header, and the second value indicates that the path segment identifier is not included in the segment routing header;
if the designated flag is the first value, obtain the path segment identifier from the segment routing header.

18. The apparatus according to claim 12, wherein if the network device serves as a head-end node, when obtaining the data packet, the obtaining module is specifically configured to:
after receiving an inner-layer payload packet, encapsulate the segment routing header for the inner-layer payload packet to obtain the data packet; wherein when encapsulating the segment routing header, the segment routing header comprises the path segment identifier and a segment list, and the segment list comprises identification information of a tail-end node, identification information of one or more intermediate nodes, and identification information of the head-end node.

19. The apparatus according to claim 12, wherein if the network device serves as a head-end node, the obtaining module is further configured to:
if a path segment among the head-end node, one or more intermediate nodes, and a tail-end node is generated by the network device, allocate the path segment identifier to the path segment when generating the path segment; publish the path segment identifier to the one or more intermediate nodes and the tail-end node, or publish the path segment identifier to a controller, so that the controller publishes the path segment identifier to the one or more intermediate node and the tail-end node; or
if the path segment among the head-end node, the one or more intermediate nodes, and the tail-end node is generated by a controller, receive a publishing message sent by the controller, wherein the publishing message comprises the path segment identifier, and the path segment identifier is allocated to the path segment by the controller when generating the path segment.

20. The apparatus according to claim 12, wherein if the network device serves as a tail-end node, the obtaining module is further configured to:
if the path segment identifier of a path segment among a head-end node, one or more intermediate nodes, and the tail-end node is allocated by the network device, send a path calculation request to the head-end node so that the head-end node generates the path segment; receive the path segment sent by the head-end node and allocate the path segment identifier to the path segment; publish the path segment identifier and the path segment to the one or more intermediate nodes and the head-end node, or publish the path segment identifier and the path segment to a controller, so that the controller publishes the path segment identifier and the path segment to the one or more intermediate node and the head-end node; or
if the path segment identifier of the path segment among the head-end node, the one or more intermediate nodes, and the tail-end node is allocated by the network device, send a path calculation request to a controller so that the controller generates the path segment; receive the path segment sent by the controller and allocate the path segment identifier to the path segment; publish the path segment identifier and the path segment to the one or more intermediate nodes and the head-end node, or publish the path segment identifier and the path segment to the controller, so that the controller publishes the path segment identifier and the path segment to the one or more intermediate node and the head-end node.

21. The apparatus according to claim 12, wherein if the network device serves as a tail-end node, the sending module is further configured to:
determine whether a forwarding path of the data packet passes through one or more designated type nodes, wherein the one or more designated type nodes are nodes that need to send the data packet to the service node based on an access control policy;
if yes, send the data packet based on the segment routing head;
if not, discard the data packet, and send a path update request to a head-end node, so that the head-end node re-designates a forwarding path which passes through the one or more designated type nodes.

22. The apparatus according to claim 14, wherein the path segment identifier comprises at least one of the following attribute features:
a path segment type identifier, wherein the path segment type identifier comprises at least one of: a first identifier, configured to indicate whether the path segment identifier is a global identifier or a local identifier; a second identifier, configured to indicate whether the path segment identifier is a static path identifier or a dynamic path identifier; a third identifier, configured to indicate whether the segment routing header comprises identification information of a head-end node or does not comprise the identification information of the head-end node; a fourth identifier, configured to indicate contents that needs to be checked; a fifth identifier, configured to indicate a check algorithm; or a sixth identifier, configured to indicate an application scenario corresponding to the path segment identifier;
a segment routing policy identifier, configured to indicate a segment routing policy to which a path segment belongs;
a candidate path identifier, configured to indicate a candidate path to which the path segment belongs;
a segment routing path identifier, configured to indicate a segment list to which the path segment belongs; or
a check value, obtained by checking the contents that needs to be checked indicated by the fourth identifier by using the check algorithm indicated by the fifth identifier.

23. A network device, comprising a processor and a machine-readable storage medium, wherein the machine-readable storage medium stores machine executable instructions executable by the processor, and the processor is configured to execute the machine executable instructions to implement the method according to any one of claims 1 to 11.
